(19) Europäisches Patentamt / European Patent Office / Office européen des brevets

(11) **EP 3 993 940 B1**

(12) **EUROPÄISCHE PATENTSCHRIFT**

(45) Veröffentlichungstag und Bekanntmachung des Hinweises auf die Patenterteilung:
**15.05.2024   Patentblatt 2024/20**

(21) Anmeldenummer: **20740538.2**

(22) Anmeldetag: **30.06.2020**

(51) Internationale Patentklassifikation (IPC):
**B23F 19/00** *(2006.01)*     **B23F 21/00** *(2006.01)*
**B23F 1/02** *(2006.01)*     **B23F 5/04** *(2006.01)*
**B23F 21/02** *(2006.01)*     **B23F 21/10** *(2006.01)*
**B23F 5/16** *(2006.01)*

(52) Gemeinsame Patentklassifikation (CPC):
**B23F 19/002; B23F 1/023; B23F 5/04; B23F 21/00;
B23F 21/026; B23F 21/10;** B23F 5/163;
F16H 55/0853; F16H 55/088; F16H 55/0886;
F16H 55/22

(86) Internationale Anmeldenummer:
**PCT/EP2020/000123**

(87) Internationale Veröffentlichungsnummer:
**WO 2021/001055 (07.01.2021 Gazette 2021/01)**

(54) **VERFAHREN ZUR HERSTELLUNG VON ZAHNFLANKENMODIFIKATIONEN AN VERZAHNUNGEN VON WERKSTÜCKEN**

METHOD FOR PRODUCING TOOTH FLANK MODIFICATIONS ON TOOTHING OF WORKPIECES

PROCÉDÉ PERMETTANT LA RÉALISATION DE MODIFICATIONS DE FLANCS DE DENT SUR DES DENTURES DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2019   DE 102019004687**

(43) Veröffentlichungstag der Anmeldung:
**11.05.2022   Patentblatt 2022/19**

(73) Patentinhaber: **Rheinisch-Westfälische Technische
Hochschule (RWTH) Aachen
52062 Aachen (DE)**

(72) Erfinder:
• **LÖPENHAUS, Christoph
52070 Aachen (DE)**
• **BRECHER, Christian
52074 Aachen (DE)**

(74) Vertreter: **Jackisch-Kohl, Anna-Katharina
Patentanwälte
Jackisch-Kohl & Kohl
Stuttgarter Strasse 115
70469 Stuttgart (DE)**

(56) Entgegenhaltungen:
EP-A1- 0 278 512       EP-A1- 3 050 659
EP-A2- 2 422 920       EP-A2- 2 581 161
DE-A1-102012 005 228   US-A1- 2017 341 205
US-A1- 2018 126 471

**Beschreibung**

Die Erfindung betrifft ein Verfahren zur Herstellung von Zahnflankenmodifikationen an Verzahnungen von Werkstücken nach dem Oberbegriff des Anspruches 1.

Im Zuge der Elektromobilität kommt dem Geräuschverhalten von Zahnradgetrieben eine erhöhte Bedeutung zu. Besonders störend wird die tonale Charakteristik des Getriebegeräusches empfunden. Tonale Geräusche zeichnen sich dadurch aus, dass das Frequenzspektrum ausgeprägte Amplituden einzelner Frequenzen (Töne) aufweist, die über dem Amplitudenniveau des Grundrauschens liegen. Dies sind bei Getriebeverzahnungen insbesondere, aber nicht ausschließlich, die Frequenz des Zahneingriffes und deren Höherharmonische, die im Wesentlichen die Tonalität des Getriebegeräusches bestimmen. Mit zunehmender Drehzahl nimmt häufig die Tonalität zu. Um das Getriebegeräusch zu verringern, werden an den Verzahnungen der Getrieberäder Flankenmodifikationen vorgenommen, die für das Laufverhalten von großer Bedeutung sind. Üblicherweise werden die Modifikationen von Zahn zu Zahn identisch ausgeführt. Durch eine variable Flankenmodifikation von Zahn zu Zahn ergibt sich eine erhebliche Verbesserung des Lauf- und damit auch des Geräuschverhaltens, da insbesondere die Tonalität, entstehend durch eine identische Anregung von Zahneingriff zu Zahneingriff, gemindert wird.

Um solche Flankenmodifikationen an den Zähnen vorzusehen, wird üblicherweise das diskontinuierliche Profilschleifen eingesetzt. Dazu wird die Position des Werkzeuges von Lücke zu Lücke in den Eingriffsbedingungen zum Werkstück etwas verändert. Solche Verfahren sind allerdings sehr aufwändig und für eine hochproduktive Fertigung wenig geeignet.

Für hochproduktive Fertigungsverfahren werden kontinuierlich abwälzende Fertigungsverfahren eingesetzt. Mit ihnen kann allerdings an den Zähnen des Werkstückes stets nur eine gleiche Flankenmodifikation vorgesehen werden. Dadurch lässt sich aber die Tonalität und damit das Geräuschverhalten nur wenig verringern.

Beim gattungsgemäßen Verfahren (EP 2 581 161 A2) ist der Quotient aus der Anzahl der Zähne des Zahnrades und der Anzahl der Schneckengänge der Schleifschnecke nicht ganzzahlig, so dass alle Zähne des Zahnrades beim Schleifen nach und nach in alle Schneckengänge gelangen, wodurch eine Vergleichmäßigung des Schliffbildes erreicht wird.

Der Erfindung liegt die Aufgabe zugrunde, das gattungsgemäße Verfahren so auszugestalten, dass in kostengünstiger und in hochproduktiver Weise die Geräuschentwicklung eines Zahnradgetriebes erheblich verringert werden kann.

Diese Aufgabe wird beim gattungsgemäßen Verfahren erfindungsgemäß mit den kennzeichnenden Merkmalen des Anspruches 1 gelöst.

Mit dem erfindungsgemäßen Verfahren können unterschiedliche Zahnflankenmodifikationen am Werkstück von Zahn zu Zahn durch ein kontinuierlich abwälzendes Fertigungsverfahren erzeugt werden. Hierfür ist das eingesetzte Werkzeug mit individuell unterschiedlichen Werkzeugprofilgeometrien ausgestattet. Bei abrichtbaren Werkzeugen wird diese Geometrie durch einen entsprechenden Abrichter mit veränderlichem Profil eingebracht. Während des Abwälzvorganges werden mit diesen unterschiedlichen Werkzeugprofilgeometrien an den Zähnen des Werkstückes die unterschiedlichen Zahnflankenmodifikationen von Zahn zu Zahn erzeugt. Je nach Gestaltung des Getriebes werden die Werkzeugprofilgeometrien am Werkzeug so gestaltet, dass die dadurch am Werkstück gebildeten Zahnflankenmodifikationen zu einer nur geringen Geräuschentwicklung und insbesondere Tonalität des Getriebes führen. Aufgrund der kontinuierlich abwälzenden Fertigungsweise lassen sich die Werkstücke kostengünstig und mit hoher Produktivität vorsehen.

Für die kontinuierlich abwälzenden Fertigungsverfahren kommen die üblichen bekannten Verfahren in Betracht, wie beispielhaft ein kontinuierliches Wälzschleifen, kontinuierliches Profilschleifen, Wälzfräsen, Verzahnungshonen, Verzahnungsschaben, Wälzschälen, Wälzstoßen und dergleichen. Mit diesen Verfahren ist die Feinbearbeitung sowohl im weichen wie auch gehärteten Werkstückwerkstoffzustand möglich.

Vorteilhaft wird eine Teilergleichheit von Werkstückzähnezahl und Werkzeugzähnezahl realisiert.

Als Werkzeuge können schneckenförmig ausgebildete Werkzeuge eingesetzt werden. Sie werden beispielsweise für das kontinuierliche Wälzschleifen, kontinuierliche Profilschleifen, Wälzfräsen und dergleichen eingesetzt.

Das schneckenförmige Werkzeug kann mit wenigstens zwei Gängen versehen sein, die unterschiedlich profiliert sind. Dadurch wird erreicht, dass sich die individuellen Werkzeugprofilgeometrien von Gang zu Gang auf dem zu bearbeitenden Werkstück periodisch abbilden.

Die Gangzahl des schneckenförmigen Werkzeuges kann je nach Getriebeausbildung und/oder dem zu bearbeitenden Werkstück gestaltet sein. Hat das schneckenförmige Werkzeug beispielhaft drei unterschiedlich profilierte Gänge, dann werden am Werkstück die Zähne periodisch mit den entsprechenden Zahnflankenmodifikationen ausgestattet. Bei drei Gängen mit unterschiedlicher Profilierung wiederholt sich daher die Ausbildung der Zahnflankenmodifikationen am Werkstück nach jeweils drei Zähnen.

Bei einer anderen vorteilhaften Ausbildung ist das schneckenförmige Werkzeug so ausgebildet, dass es mindestens nur einen Gang aufweist, der über seine Länge unterschiedlich profilierte Gangbereiche aufweist. Diese Gangbereiche sind dann so vorgesehen, dass mit ihnen aufeinanderfolgende Zähne des Werkstückes bearbeitet werden. In diesem Fall und auch unter

Einbeziehung einer gezielten Beeinflussung der Bearbeitungskinematik ist es nicht erforderlich, dass zwischen der Werkstückzähnezahl und der Werkzeuggangzahl ein ganzzahliger Teiler realisiert wird.

Der Gang weist wenigstens zwei unterschiedlich profilierte Gangbereiche auf, so dass am Werkstück zwei unterschiedliche Zahnflankenmodifikationen vorgesehen werden können. Die unterschiedlich profilierten Gangbereiche sind vorteilhaft so innerhalb des Ganges vorgesehen, dass aufeinanderfolgende Zähne des Werkstückes mit der jeweiligen Zahnflankenmodifikation versehen sind. Aufgrund des kontinuierlich abwälzenden Fertigungsverfahrens sind daher in dem einzigen Gang des schneckenförmigen Werkzeuges die entsprechenden Gangbereiche wiederholend mit Abstand hintereinander angeordnet. Zur Aufprägung unterschiedlicher Modifikationen ist möglicherweise eine Relativbewegung des Werkzeugs z.B. durch Shiften (Diagonalschleifen) oder eine Relativbewegung des Werkstücks z.B. durch Lösung der Wälzkopplung notwendig.

Das Verfahren ist so gestaltet, dass mit dem Werkzeug unmittelbar das Werkstück bearbeitet werden kann, das später in das Getriebe eingebaut wird. Als Werkzeug kann aber auch ein entsprechend geometrisch modifiziertes Abrichtwerkzeug, z.B. mehrrillige Profilrollen, eingesetzt werden, mit dem das eigentliche Bearbeitungswerkzeug hinsichtlich veränderlicher Geometrien bearbeitet wird. Mit dem Abrichtwerkzeug lassen sich die unterschiedlichen Zahnflankenmodifikationen am Bearbeitungswerkzeug einfach erzeugen.

Es ist auch möglich, als Bearbeitungswerkzeuge zahnradförmige Werkzeuge zu verwenden, deren Zähne unterschiedliche Zahngeometrien aufweisen. Sie werden beispielsweise für das Verzahnungshonen, Wälzstoßen, Wälzschälen und dergleichen eingesetzt. Diese unterschiedlichen Zahngeometrien bilden sich beim kontinuierlich abwälzenden Fertigungsverfahren an den Zahnflanken des Werkstückes periodisch ab. Das zahnradförmige Werkzeug hat wenigstens zwei unterschiedliche Zahngeometrien, die sich über den Umfang des zahnradförmigen Werkzeuges vorteilhaft unregelmäßig wiederholen.

Das zur Durchführung des Verfahrens eingesetzte Werkzeug zeichnet sich dadurch aus, dass es individuelle Werkzeugprofilgeometrien aufweist. Je nach Zahl dieser unterschiedlichen Werkzeugprofilgeometrien lassen sich am Werkstück entsprechende Zahnflankenmodifikationen vorsehen. Das Werkzeug hat zumindest zwei individuelle Werkzeugprofil-geometrien, so dass das zu bearbeitende Werkstück mit zwei unterschiedlichen Zahnflankenmodifikationen versehen sein kann.

Bei einer vorteilhaften Ausbildung ist das Werkzeug schneckenförmig ausgebildet. Es kann hierbei wenigstens zwei Gänge aufweisen, die unterschiedlich profiliert sind. Mit einem solchen Werkzeug können die gewünschten Zahnflankenmodifikationen periodisch am Werkstück erzeugt werden.

Bei einer anderen vorteilhaften Ausführung ist das Werkzeug ebenfalls schneckenförmig ausgebildet, jedoch mit nur einem Gang versehen. In diesem Falle weist der Gang über seine Länge unterschiedlich profilierte Gangbereiche auf. Sie sind in einem solchen Abstand längs des Ganges hintereinander vorgesehen, dass mit diesen Gangbereichen die Zahnflanken aufeinanderfolgender Zähne des Werkstückes modifiziert werden können.

Ebenfalls ist es möglich, das Werkzeug zahnradförmig auszubilden. In diesem Falle sind die Zähne mit einer individuellen Zahngeometrie versehen. Dieses Werkzeug weist dann wenigstens zwei individuelle unterschiedliche Zahngeometrien auf, so dass an den Zähnen des Werkstückes wenigstens zwei unterschiedliche Zahnflankenmodifikationen vorgesehen werden können. Hierbei wird ein ganzzahliges Teilerverhältnis der Zähnezahlen von Werkzeug und Werkstück eingesetzt.

Das zahnradförmige Werkzeug kann eine Außen- oder eine Innenverzahnung aufweisen.

Das Werkzeug kann auch ein Abrichter mit veränderlichem Profil sein, um bei abrichtbaren Werkzeugen individuell unterschiedliche Werkzeugprofilgeometrien vorzusehen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1   verschiedene typische Zahnflankenmodifikationen von Zahnrädern,

Fig. 2   die Ausbildung von Zähnen eines Zahnrades nach dem Stand der Technik,

Fig. 3   in einer Darstellung entsprechend Fig. 2 die Zähne eines nach dem erfindungsgemäßen Verfahren hergestellten Zahnrades,

Fig.4   eine Aufstellung der üblichen Verzahnverfahren,

Fig. 5   die Durchführung des erfindungsgemäßen Verfahrens, erläutert an hand eines schneckenförmigen Werkzeuges mit ganzzahliger Übersetzung,

Fig. 6   in einer Darstellung entsprechend Fig. 5 die Durchführung des erfindungsgemäßen Verfahrens mittels eines zahnradförmigen Werkzeuges mit ganzzahliger Übersetzung,

Fig. 7   die geometrisch-kinematische Realisierung des erfindungsgemäßen Verfahrens bei einem schneckenförmigen Werkzeug mit einer ganzzahligen oder einer unganzzahligen Übersetzung.

Mit den im Folgenden beschriebenen Verfahren werden einzelne Zähne oder Gänge eines Werkzeuges individuell unterschiedlich gestaltet. Bei Teilergleichheit zum zu bearbeitenden Werkstück werden diese individuellen Zahn- bzw. Ganggeometrien auf das Werkstück in einem kontinuierlichen Verfahren aufgebracht.

Bei fehlender Teilergleichheit, insbesondere bei schneckenbasierten Werkzeugen, erfolgt eine veränderliche Werkzeuggeometrieerzeugung nicht nur pro Gang, sondern auch entlang des Ganges. Durch die Koppelung von veränderlicher Geometrie von Gang zu Gang sowie entlang eines Ganges mit einer entsprechenden Verfahrkinematik prägt sich eine flankenindividuelle Geometrie auf den Zähnen des Werkstückes auf.

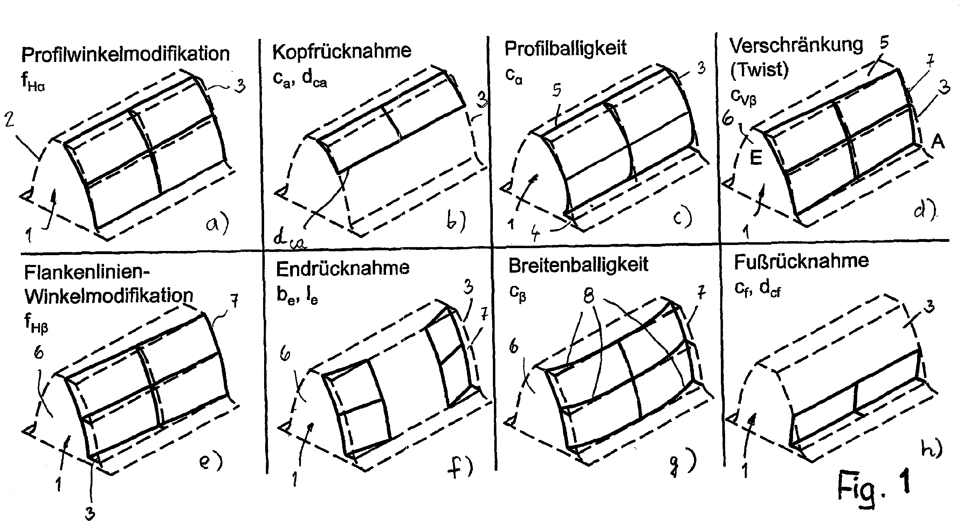

In Fig. 1 sind typische Zahnflankenmodifikationen dargestellt. Das Verfahren kann selbstverständlich auch für nicht typische Modifikationen genutzt werden.

Fig. 1a zeigt eine Profilwinkelmodifikation $f_{H\alpha}$ an einem Zahn. Die Profilwinkelmodifikation ist durch die dick ausgezogenen Linien veranschaulicht. Der dargestellte Zahn 1 hat die beiden Zahnflanken 2, 3. Mit gestrichelten Linien sind die nicht bearbeiteten Zahnflanken dargestellt. Im Ausführungsbeispiel ist die Zahnflanke 3 mit einem entsprechenden Werkzeug so bearbeitet worden, dass diese Zahnflanke die durch dicke Linien gekennzeichnete Profilwinkelmodifikation aufweist.

Fig. 1b zeigt als Zahnflankenmodifikation eine Kopfrücknahme $c_a$ der Zahnflanke 3. Die Kopfrücknahme ist wiederum durch dicke ausgezogene Linien veranschaulicht. Die Kopfrücknahme $c_a$ beginnt bei $d_{ca}$ und erstreckt sich bis zum Kopfkreis. Der Materialabtrag zur Erzielung der Kopfrücknahme nimmt somit, im Stirnschnitt gesehen, beginnend bei $d_{ca}$ bis zum Kopfkreis zu.

In Fig. 1c ist eine an der Zahnflanke 3 vorgesehene Profilballigkeit $c_\alpha$ dargestellt. Die Profilballigkeit ist über die Höhe vom Fuß 4 zum Kopf 5 sowie über die gesamte Breite des Zahnes 1 vorgesehen.

Bei der Zahnflankenmodifikation gemäß Fig. 1d handelt es sich um eine Verschränkung $c_{V\beta}$. Sie ist wiederum durch fett ausgezogene Linien dargestellt und im Ausführungsbeispiel an der Zahnflanke 3 des Zahnes 1 vorgesehen. Die Verschränkung $c_{V\beta}$ erstreckt sich über die Höhe und die Breite der Zahnflanke 3. Die Verschränkung ist so ausgebildet, dass die Breite des Kopfes 5 an der einen Stirnseite 6 des Zahnes 1 kleiner ist als an der gegenüberliegenden Stirnseite 7. Die Fußbreite des Zahnes 1 ist im Bereich der Stirnseite 6 größer als im Bereich der gegenüberliegenden Stirnseite 7. Die Ausprägung der Verschränkung kann ebenfalls genau gegenläufig zu den Stirnseiten erfolgen.

Eine weitere typische Zahnflankenmodifikation zeigt Fig. 1e. Hier handelt es sich um eine Flankenlinien-Winkelmodifikation $f_{H\beta}$. Sie ist an der Zahnflanke 3 des Zahnes 1 vorgesehen und erstreckt sich über die Höhe des Zahnes 1 sowie über dessen Breite. Die ausgezogenen Linien zeigen die Flankenlinien-Winkelmodifikation $f_{H\beta}$. Eine solche Modifikation entsteht durch eine lineare Rücknahme des Materials des Zahnes 1 über dessen Breite. Dementsprechend ist die Stirnseite 7 des Zahnes 1 über dessen Höhe breiter als die gegenüberliegende Stirnseite 6.

Die Endrücknahme $b_e$, $l_e$ in Fig. 1f ist eine weitere typische Zahnflankenmodifikation. Die Endrücknahme ist beispielhaft an der Zahnflanke 3 des Zahnes 1 vorgesehen. Die Endrücknahme $b_e$, $l_e$ ergibt sich dadurch, dass vom Zahn 1 im Bereich seiner beiden Stirnseiten 6, 7 über die Zahnhöhe Material über eine bestimmte Zahnbreite abgenommen wird. Die beiden Endrücknahmen an der Zahnflanke 3 sind durch ausgezogene Linien veranschaulicht.

Bei der Herstellung der Breitenballigkeit $c_\beta$ (Fig. 1g) wird symmetrisch Material in Richtung auf die beiden Stirnseiten 6, 7 des Zahnes 1 abgetragen. Die Breitenballigkeit $c_\beta$ ist daher so ausgebildet, dass die über die Breite sich erstreckenden Flankenlinien kreisbogenförmig verlaufen.

Schließlich wird in Fig. 1h als weitere typische Zahnflankenmodifikation die Fußrücknahme cf dargestellt. Sie ist über die Breite der Zahnflanke 3 im Fußbereich vorgesehen und erstreckt sich nur über einen Teil der Höhe der Zahnflanke 3.

Die anhand der Fig. 1a bis 1h dargestellten Zahnflankenmodifikationen können symmetrisch oder unsymmetrisch und in verschiedenen Überlagerungen und Größen an beiden Zahnflanken 2,3, vorgesehen werden.

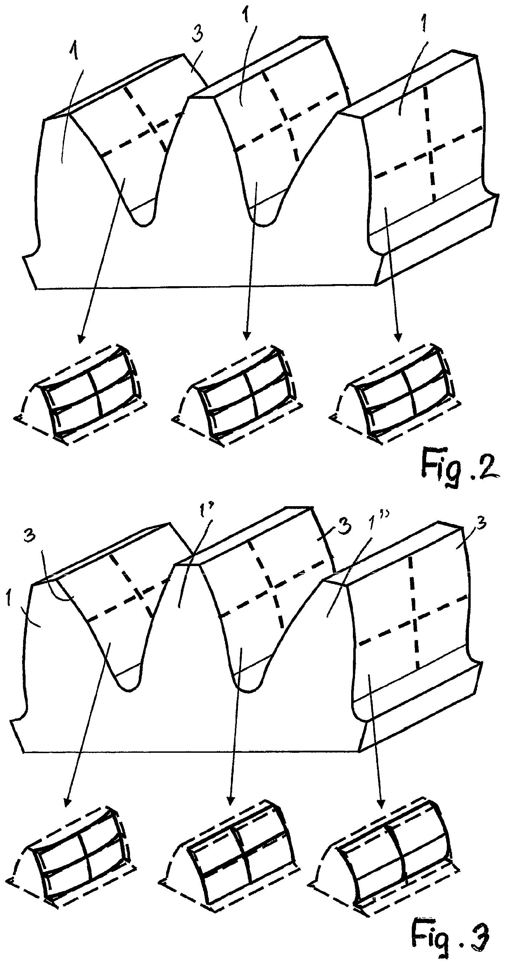

Fig. 2 zeigt beispielhaft drei Zähne 1 eines geradverzahnten Zahnrades. Alle Zähne 1 dieses Zahnrades sind an ihrer Zahnflanke 3 beispielhaft mit einer Breitenballigkeit $c_\beta$ versehen. Alle Zähne 1 dieses Zahnrades sind gleich ausgebildet, d.h. sie haben jeweils die gleiche Zahnflankenmodifikation.

Fig. 3 zeigt einen Teil eines Zahnrades, das nach dem erfindungsgemäßen Verfahren hergestellt worden ist. Mit diesem Verfahren ist es möglich, die Zahnflanken 3 der Zähne 1 mit unterschiedlichen Zahnflankenmodifikationen zu versehen. So ist beispielhaft dargestellt, dass der Zahn 1 an seiner Zahnflanke 3 mit einer Breitenballigkeit $c_\beta$, der Zahn 1' an der Zahnflanke 3 mit einer Profilwinkelmodifikation $f_{H\alpha}$ und der Zahn 1" an der Zahnflanke 3 mit einer Profilballigkeit $c_\alpha$ versehen ist.

Die in Fig. 3 dargestellten Zahnflankenmodifikationen an den Zähnen des Zahnrades sind nur beispielhaft zu verstehen. Mit dem Verfahren ist es möglich, an einem Zahnrad die Zähne hinsichtlich ihrer Zahnflankenmodifikationen gezielt zu variieren.

Mit diesem Verfahren ist es möglich, den steigenden Anforderungen an das Geräuschverhalten von Zahnrädern insbesondere im Bereich der Elektromobilität zu genügen. Da im Bereich der Elektromobilität keine geräuschemittierenden Verbrennungsmotoren mehr vorhanden sind, spielt das Geräuschverhalten der Zahnräder bzw. des Zahnradgetriebes eine wesentliche Rolle.

Die Tonalität der Zahneingriffe im Getriebe tritt bei der Elektromobilität in den Vordergrund. Aufgrund der variablen Geometrien von Zahn zu Zahn wird die Tonalität gebrochen. Diese variablen Geometrien können mittels eines kontinuierlich arbeitenden Verfahrens hergestellt werden, so dass eine hohe Produktivität erreicht wird.

Bei dem Verfahren kann es sich um ein Bearbeitungs- oder um ein Abrichtverfahren handeln.

Die Zähne können Bestandteil von Getrieberädern, aber auch von Abricht-und Bearbeitungswerkzeugen zur Herstellung solcher Getrieberäder sein.

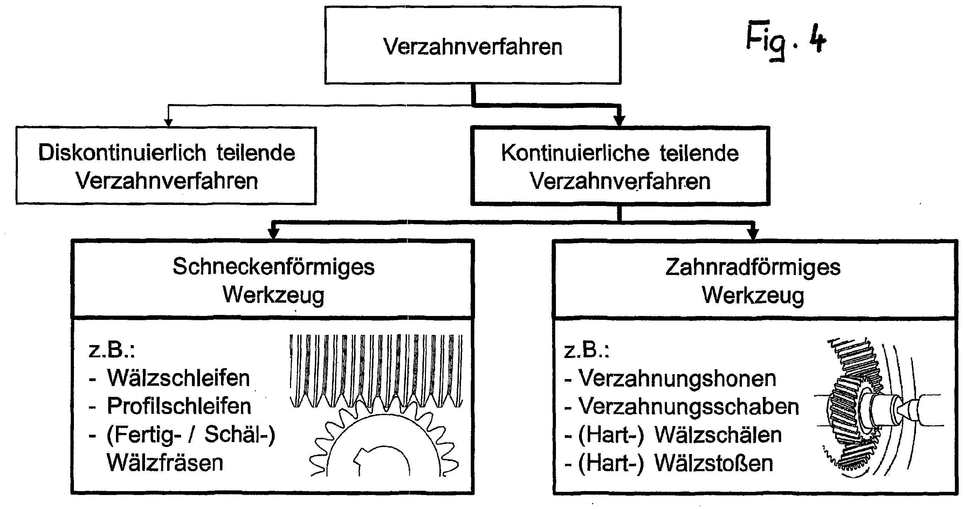

Anhand von Fig. 4 wird erläutert, wo das Verfahren eingesetzt wird. Die Verzahnverfahren lassen sich unterteilen in diskontinuierlich sowie in kontinuierlich teilende Verzahnverfahren. Relevant sind die kontinuierlich teilenden Verzahnverfahren. Hierfür können schneckenförmige Werkzeuge eingesetzt werden, beispielsweise zum Wälzschleifen, zum Profilschleifen oder zum (Fertig- / Schäl-) Wälzfräsen eingesetzt.

Alternativ können zahnradförmige Werkzeuge eingesetzt werden. Sie kommen beispielsweise zum Einsatz beim Verzahnungshonen, Verzahnungsschaben, (Hart-) Wälzschälen oder (Hart-) Wälzstoßen.

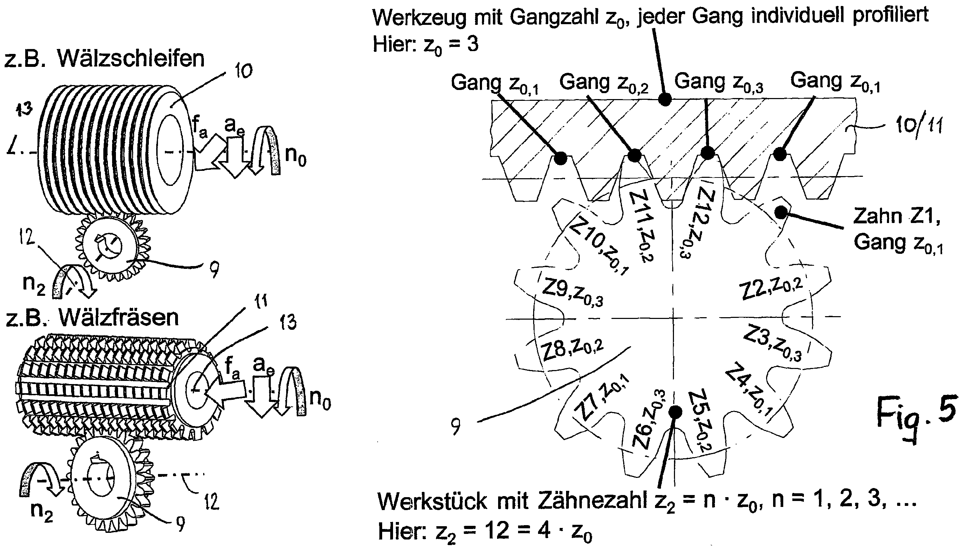

Anhand von Fig. 5 wird die Bearbeitung eines Werkstückes 9 durch ein schneckenförmiges Werkzeug 10 bzw. 11 erläutert. Die Übersetzung zwischen dem Werkzeug 10/11 und dem Werkstück 9 ist ganzzahlig.

Das Werkstück 9 hat die Zähnezahl $z_2$, die im Ausführungsbeispiel 12 beträgt.

Das Werkzeug 10/11 hat die Gangzahl $z_0$, wobei im Ausführungsbeispiel drei Gänge individuell profiliert sind. Diese unterschiedlich profilierten Gänge sind in Fig. 5 mit $z_{0,1}$, $z_{0,2}$ und $z_{0,3}$ bezeichnet. Die weiteren Gänge des Werkzeuges 10/11 sind dann wiederholt entsprechend den Gängen $z_{0,1}$ bis $z_{0,3}$ ausgebildet.

Die Zähnezahl $z_2$ des Werkstückes 9 ergibt sich somit aus der Beziehung

$$z_2 = n \bullet z_0$$

hierbei bedeutet n = 1, 2, 3, ...

Im dargestellten Ausführungsbeispiel gilt somit die Beziehung

$$z_2 = 12 = 4 \bullet z_0$$

Das Werkzeug 10 ist ein Schleifwerkzeug, das schneckenförmig ausgebildet und vorteilhaft abrichtbar ist.

Das Werkzeug 10 ist bei der Bearbeitung mit dem Werkstück 9 in Eingriff. Das Werkstück 9 in Form eines Stirnrades dreht mit der Drehzahl $n_2$ um seine Achse 13, die in üblicher Weise winklig zur Drehachse 12 des Werkstückes 9 liegt.

Die Drehung von Werkstück 9 und Werkzeug 10 ist in bekannter Weise kinematisch gekoppelt, wobei zusätzlich das Werkzeug 10 unter einem Zustellungsbetrag $a_e$ sowohl axial (Axialvorschub $f_a$) als auch vorteilhaft tangential bezüglich des Werkstückes 9 in Vorschubrichtung bewegt wird. Mit Hilfe der drei individuell profilierten Gänge $z_{0,1}$ bis $z_{0,3}$ des Werkzeuges 10 werden die entsprechenden Zahnflanken des Werkstückes 9 profiliert. Da das Werkzeug 10 drei unterschiedlich profilierte Gänge aufweist, können an den Zähnen Z1 bis Z12 entsprechend unterschiedlich modifizierte Zahnflanken im Wälzschleifverfahren erzeugt werden.

Wie aus Fig. 5 hervorgeht, hat beispielhaft der Zahn Z1 die durch den Gang $z_{0,1}$ des Werkzeuges 10 bestimmte Zahnflankenmodifikation. Die Zähne Z2 und Z3 haben die durch die Gänge $z_{0,2}$ und $z_{0,3}$ des Werkzeuges 10 bestimmten Zahnflankenmodifikationen. Anschließend wiederholen sich die Zahnflankenmodifikationen an den Zähnen Z4 bis Z6, Z7 bis Z9 und Z10 bis Z12.

Wird als Werkzeug 11 ein Wälzfräser eingesetzt, der schneckenförmig gestaltet ist, ergeben sich grundsätzlich die gleichen Abläufe wie bei Einsatz des Wälzschleifzylinders 10. Das Werkstück 9 und das Werkzeug 11 werden um ihre jeweiligen Achsen 12, 13 mit den Drehzahlen $n_2$ und $n_0$ gedreht. Die beiden Drehachsen 12, 13 liegen in bekannter Weise winklig zueinander Die Drehung von Werkstück 9 und Werkzeug 11 ist wiederum kinematisch gekoppelt, so dass mit dem Werkzeug 11 das gewünschte Profil am Werkstück 9 erzeugt werden kann.

Das Werkzeug 11 in Form des Wälzfräsers hat beispielhaft drei individuell profilierte Gänge $z_{0,1}$ bis $z_{0,3}$. Dementsprechend werden bei der Bearbeitung am Werkstück 9 jeweils Zähne erzeugt, die individuell profilierte Zahnflanken aufweisen, wie anhand des Wälzschleifverfahrens erläutert worden ist.

Die beiden beispielhaft beschriebenen Verfahren mittels schneckenförmigem Werkzeug 10, 11 ermöglichen bei einem kontinuierlich arbeitenden Verfahren die Herstellung variabler Topographien von Zahn zu Zahn am Werkstück 9. Abweichend vom Ausführungsbeispiel kann das Werkzeug 10, 11 auch nur zwei individuell profilierte Gänge, jedoch auch mehr als drei individuell profilierte Gänge aufweisen, so dass am Werkstück 9 eine entsprechende Zahl von Zähnen mit individuell gestalteter Zahnflankenmodifikation erzeugt werden kann.

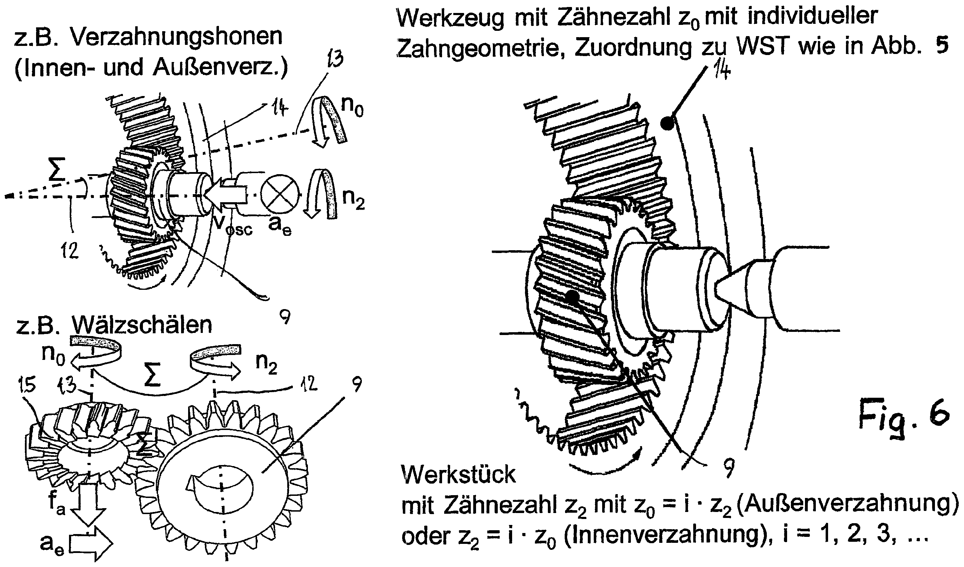

Fig. 6 zeigt zwei Ausführungsbeispiele, bei denen die Zahnflankenmodifikationen am Werkstück 9 mit einem zahnradförmigen Werkzeug 14, 15 hergestellt werden.

Die Werkzeuge 14, 15 haben die Zähnezahl $z_0$ mit einer individuellen Zahngeometrie. Die Zuordnung des jeweiligen Werkzeuges 14, 15 zum Werkstück 9 erfolgt in gleicher Weise wie bei den Ausführungsbeispielen gemäß Fig. 5. Zwischen dem Werkzeug 14, 15 und dem Werkstück 9 ist eine ganzzahlige Übersetzung gegeben.

Das Werkzeug 14 ist ein innenverzahnter zylindrischer Honstein. Bei der Werkstückbearbeitung wird das Werkzeug 14 um die Achse 13 und das Werkstück 9 um die Achse 12 mit den Drehzahlen $n_0$ und $n_2$ gedreht. Die beiden Drehachsen 12, 13 liegen unter dem Achskreuzwinkel $\Sigma$ zueinander. Die Drehzahlen $n_0$ und $n_2$ sind in bekannter Weise aufeinander abgestimmt.

Das Werkstück 9 wird während der Bearbeitung mit einer Oszillationsgeschwindigkeit $v_{osc}$ in Richtung seiner Achse 12 sowie senkrecht entsprechend der Zustellung $a_e$ hierzu in Richtung auf das Werkzeug 14 verschoben. Das Verzahnungshonen ist allgemein bekannt und wird darum auch nicht näher erläutert. Das Vorgehen gilt gleichermaßen auch für innenverzahnte Werkstücke und außenverzahnte Werkzeuge.

Das Werkstück 9 hat die Zähnezahl $z_2$, wobei der Zusammenhang mit der Zähnezahl $z_0$ des Werkzeuges 14 gemäß der Beziehung $z_0 = i \cdot z_2$ besteht, wobei i = 1,2,3,... besteht. Dies gilt für ein außenverzahntes Werkstück, wie im Ausführungsbeispiel dargestellt.

Weist das Werkstück eine Innenverzahnung auf, dann gilt für den Zusammenhang zwischen der Zähnezahl $z_2$ des Werkstückes 9 und der Zähnezahl des Werkzeuges 15 die Beziehung $z_2 = i \cdot z_0$, wobei i = 1,2,3,...ist.

Das Werkzeug 14 weist Zähne mit unterschiedlicher Profilierung auf, so dass die Zähne des Werkstückes 9 in der beschriebenen Weise mit unterschiedlichen Zahnflankenmodifikationen versehen werden können, je nach Gestaltung der Zähne $z_0$ des Werkzeuges 14.

Fig. 6 zeigt als weitere Ausführungsform das Wälzschälen mit Hilfe des Werkzeuges 15. Das Werkzeug 15 wird um seine Achse 13 und das Werkstück um seine Achse 12 während der Herstellung mit den Drehzahlen $n_0$ und $n_2$ gedreht. Die beiden Achsen 12, 13 liegen unter dem Achskreuzwinkel $\Sigma$ zueinander. Das Werkzeug 15 wird während der Bearbeitung in Richtung seiner Achse 13 verschoben (Axialvorschub $f_a$) und gleichzeitig radial in Richtung auf das Werkstück 9 verschoben.

Die Drehungen von Werkstück 9 und Werkzeug 15 sind in bekannter Weise kinematisch miteinander gekoppelt, so dass das Zahnprofil in gewünschtem Maße erzeugt werden kann. Aufgrund der individuellen Zahngeometrie des Werkzeuges 15 können am Werkstück 9 im kontinuierlichen Verfahren Zähne mit individueller Flankenmodifikation hergestellt werden.

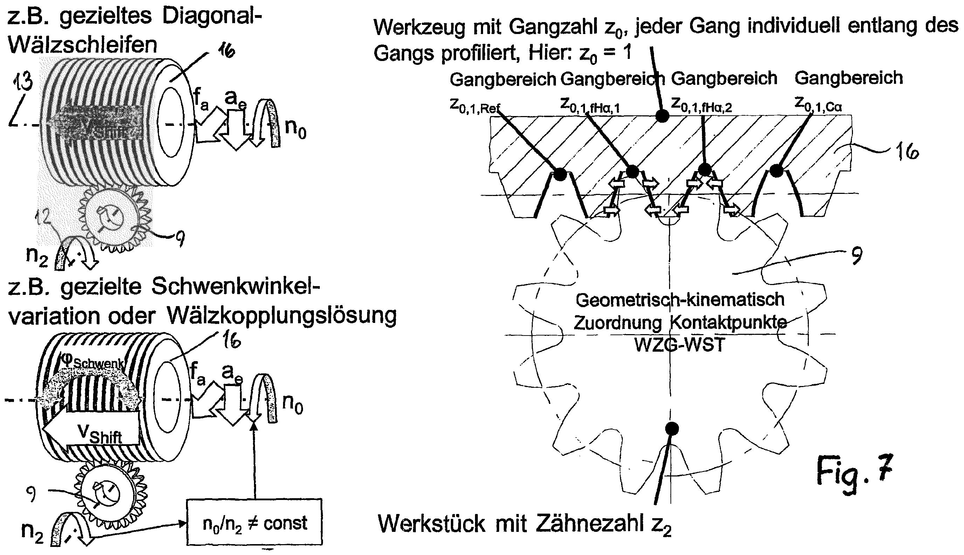

Fig. 7 zeigt weitere Beispiele, wie Werkstücke mit individuell ausgebildeten Zahnflankenmodifikationen in einem kontinuierlichen Verfahren hergestellt werden können.

Das eingesetzte Werkzeug 16 ist beispielhaft ein schneckenförmiges Schleifwerkzeug, mit dem ein Diagonal-Wälzschleifen durchgeführt wird. Bei dieser Verfahrensweise erfolgt gleichzeitig mit der Drehung des Werkzeuges 16 um seine Achse 13 ein Axial- und Tangentialvorschub.

Das Werkzeug 16 hat beispielhaft die Gangzahl $z_0 = 1$. Dieser Gang ist über seine Länge mit unterschiedlich profilierten Gangbereichen versehen, wie beispielhaft dargestellt ist. Der Gangbereich $z_{0,1,Ref}$ bildet einen Referenzbereich, mit dem am Zahn des Werkstückes eine Referenzzahnflankenmodifikation erzeugt wird.

Der Gangbereich $z_{0,1,fH\alpha,1}$ ist so gestaltet, dass mit ihm in der beschriebenen Weise eine Profilwinkelmodifikation $f_{H\alpha}$ an der Zahnflanke des Werkstückzahns erzeugt werden kann.

Der Gangbereich $z_{0,1,fH\alpha,2}$ ist so gestaltet, dass mit ihm eine weitere andere Profilwinkelmodifikation an der Zahnflanke 3 des Werkstückzahnes erzeugt werden kann.

Der Gangbereich $z_{0,1,c\alpha}$ ist derart geformt, dass mit ihm an der Zahnflanke 13 des Werkstückes 9 die Profilballigkeit $c_\alpha$ erzeugt werden kann.

Die Gangbereiche liegen in einem solchen Abstand hintereinander, dass jeder Gangbereich die Zahnflanken unterschiedlicher Zähne des Werkstückes bearbeitet.

In Fig. 7 ist in Bezug auf die die Profilwinkelmodifikation erzeugenden Gangbereiche durch die Pfeile kenntlich gemacht, wie an den Zähnen des Werkstückes 9 der Werkstückabtrag an den Zahnflanken des Werkstückes erfolgt.

Beim Diagonal-Wälzschleifen werden das Werkstück 9 und das Werkzeug 16 um ihre jeweiligen Achsen 12, 13 mit den Drehzahlen $n_0$, $n_2$ aufeinander abgestimmt gedreht, wobei die beiden Drehachsen 12, 13 in bekannter Weise unter einem Schwenkwinkel angeordnet sind.

Wie Fig. 7 weiter zu entnehmen ist, kann die Werkstückbearbeitung auch durch eine gezielte Schwenkwinkelvariation oder eine gezielte Wälzkopplung gezielt variiert werden. So kann der Schwenkwinkel $\varphi$ des Werkzeuges 16 relativ zum Werkstück 9 geändert werden.

Für die Wälzkopplungslösung kann vorgesehen sein, dass das Verhältnis der Drehzahl $n_0$ des Werkzeuges 16 zur Drehzahl $n_2$ des Werkstückes 9 nicht konstant ist.

Die Schwenkwinkelvariation und die Wälzkopplungsvariation sind nur weitere Beispiele dafür, wie gezielt Werkstückzahnflankenmodifikationen in einem kontinuierlich abwälzenden Fertigungsverfahren vorteilhaft durch Beeinflussung der Verfahrenskinematik hergestellt werden können.

Bei der Ausführungsform gemäß Fig. 7 kann die Übersetzung zwischen dem schneckenförmigen Werkzeug 16 und dem Werkstück 9 ganzzahlig oder unganzzahlig sein.

Wie die anhand der Fig. 5 bis 7 erläuterten Beispiele zeigen, können mit einem kontinuierlich abwälzenden Fertigungsverfahren unterschiedliche Flankenmodifikationen an Verzahnungen vorgesehen sein. Werden schneckenförmige Werkzeuge eingesetzt (Fig. 5 und 7), dann können abrichtbare Werkzeuge eingesetzt werden, wobei einzelne Gänge des schneckenförmigen Werkzeuges 10, 11, 16 zur Erzeugung variabler Werkzeuggeometrien in den einzelnen Gängen individuell abgerichtet werden können. Beim Ausführungsbeispiel nach Fig. 5 sind drei Gänge am schneckenförmigen Werkzeug 10, 11 vorgesehen, die jeweils individuell profiliert sind (Standardkinematik).

Fig. 7 zeigt beispielhaft, dass entlang eines Ganges des schneckenförmigen Werkzeuges 16 variable Werkzeuggeometrien entlang dieses Ganges abgerichtet werden können (Diagonalkinematik).

Werden für die schneckenförmigen Werkzeuge 10, 11, 16 nicht abrichtbare Werkzeuge verwendet, dann werden die variablen Werkzeuggeometrien entlang eines Ganges in unterschiedlichen Gangbereichen geschliffen, wie beispielhaft anhand von Fig. 7 erläutert worden ist.

Bei der Realisierung ganzzahliger Teiler zwischen der Zähnezahl $z_2$ des Werkstückes und der Zähnezahl $z_0$ des Werkzeuges kommen immer dieselben Zähne des Werkstückes 9 mit demselben Gang des Werkzeuges 10, 11 in Kontakt.

Das Ergebnis ist, dass sich unterschiedliche Ganggeometrien auf die Verzahnung des Werkstückes 9 als variable Geometrien aufprägen.

Der Einsatz des schneckenförmigen Werkzeuges ist insbesondere beim Fertigwälzfräsen, beim Wälzschleifen oder beim Schälwälzfräsen vorgesehen.

Werden als Werkzeuge zahnradförmige Werkzeuge eingesetzt (Fig. 6), dann werden die variablen Flankenmodifikationen an den Verzahnungen ebenfalls mit kontinuierlich abwälzenden Fertigungsverfahren erzeugt. Hierbei können abrichtbare Werkzeuge 14, 15 eingesetzt werden. Für diesen Abrichtvorgang kann ein Abrichtrad mit variablen Modifikationen eingesetzt werden. Auch bei diesem Verfahren wird ein ganzzahliger Teiler zwischen der Zähnezahl $z_2$ des Werkstückes 9 und der Zähnezahl $z_0$ des Werkzeuges realisiert. Dadurch wird erreicht, dass immer dieselben Zähne des Werkstückes 9 mit denselben Zähnen des Werkzeuges 14 in Kontakt kommen.

Dadurch werden die unterschiedlichen Abrichterzahngeometrien über das Werkzeug 14, 15 auf die Verzahnung als variable Geometrien aufgeprägt. Beispielhaft ist hierfür das Verzahnungshonen erläutert worden.

Anhand von Fig. 6 ist auch das Wälzschälen erläutert worden. Ist das Werkzeug 15 nicht abrichtbar, dann werden die einzelnen Zähne des Werkzeuges 15 individuell mit der gewünschten Korrektur geschliffen.

Auch hierbei wird ein ganzzahliger Teiler zwischen der Zähnezahl $z_2$ des Werkstückes 9 und der Zähnezahl $z_0$ des Werkzeuges 15 realisiert, so dass immer dieselben Zähne des Werkstückes 9 mit denselben Zähnen des Werkzeuges 15 in Kontakt kommen.

Außer dem Schälen kommen hierfür auch Schaben oder beispielhaft Stoßen in Betracht.

Aufgrund der beschriebenen Teilergleichheit von Werkstückzähnezahlen und Gangzahl bzw. Zähnezahl des Werkzeuges bilden sich in der beschriebenen Weise individuelle Werkzeugprofilgeometrien von Gang zu Gang bzw. von Zahn zu Zahn auf dem Werkstück periodisch ab.

Wird bei der Bearbeitung noch eine gezielte Werkzeugbewegung während des Bearbeitungsprozesses durchgeführt, wie beispielhaft anhand der Fig. 5 bis 7 erläutert worden ist, können individuelle Geometrien von Zahn zu Zahn am Werkstück 9 verstärkt werden.

Zusätzlich oder anstelle der gezielten ergänzenden Werkzeugbewegung kann auch eine veränderliche Geometrie längs eines Ganges oder periodisch eintretender Werkzeugzähne herangezogen werden sowie die Fertigungskinematik wie beschrieben erweitert werden, um eine individuelle Geometrie von Zahn zu Zahn am Werkstück zu verstärken. Damit ist eine Aufhebung der Teilergleichheit von Werkzeugzähne- bzw. -gangzahl und Werkstückzähnezahl möglich.

Mit den beschriebenen Verfahren können Bearbeitungs- und Abrichtverfahren durchgeführt werden. Hierfür werden die beschriebenen Bearbeitungswerkzeuge 10, 11, 14 bis 16 sowie entsprechende Abrichtwerkzeuge eingesetzt.

**Patentansprüche**

1. Verfahren zur Herstellung von Zahnflankenmodifikationen an Verzahnungen von Werkstücken, bei dem das Werkstück und ein Werkzeug relativ zueinander bewegt und hierbei Material von der Zahnflanke des Werkstückes abgetragen wird,
**dadurch gekennzeichnet, dass** unterschiedliche Zahnflankenmodifikationen an Zähnen des Werkstückes (9) mittels eines kontinuierlich abwälzenden Fertigungsverfahrens erzeugt werden, indem das Werkzeug (10, 11, 14 bis 16) individuell unterschiedliche Werkzeugprofilgeometrien aufweist, die an den Zähnen des Werkstückes (9) die unterschiedlichen Zahnflankenmodifikationen erzeugen.

2. Verfahren nach Anspruch 1,
**dadurch gekennzeichnet, dass** zwischen der Werkstückzähnezahl ($z_2$) und der Werkzeugzähne- bzw. -gangzahl ($z_0$) ein ganzzahliger Teiler realisiert wird.

3. Verfahren nach Anspruch 1 oder 2,
**dadurch gekennzeichnet, dass** als Werkzeuge (10, 11, 16) schneckenförmig ausgebildete Werkzeuge eingesetzt werden.

4. Verfahren nach Anspruch 3,
**dadurch gekennzeichnet, dass** das schneckenförmige Werkzeug (10, 11) wenigstens zwei Gänge ($z_{0,1}$, $z_{0,2}$,...) aufweist, die unterschiedlich profiliert sind.

5. Verfahren nach Anspruch 3 oder 4,
**dadurch gekennzeichnet, dass** das schneckenförmige Werkzeug (16) einen Gang ($z_{0,1}$) aufweist, der über seine Länge unterschiedlich profilierte Gangbereiche aufweist.

6. Verfahren nach einem der Ansprüche 1 bis 5, **dadurch gekennzeichnet, dass** das Werkzeug ein Abrichtwerkzeug zur Bearbeitung von Werkzeugen ist.

7. Verfahren nach einem der Ansprüche 1 bis 6, **dadurch gekennzeichnet, dass** als Werkzeuge (14, 15) zahnradförmige Werkzeuge eingesetzt werden, deren Zähne unterschiedliche Zahngeometrien aufweisen.

8. Verfahren nach einem der Ansprüche 1 bis 7, **dadurch gekennzeichnet, dass** als Werkzeug ein abrichtbares Werkzeug eingesetzt wird, an dem die unterschiedlichen Werkzeugprofilgeometrien mittels eines Abrichtwerkzeuges hergestellt werden.

**Claims**

1. A method for producing tooth flank modifications on teeth of workpieces, in which the workpiece and a tool are moved relatively to one another and in this connection, material is removed from the tooth flank of the workpiece, **characterized in that** different tooth flank modifications are generated on teeth of the workpiece (9) by means of a continuously hobbing manufacturing method, **in that** the tool (10, 11, 14 to 16) has individually different tool profile geometries which generate the different tooth flank modifications on the teeth of the workpiece (9).

2. The method according to Claim 1, **characterized in that** an integer divisor is realized between the number of teeth $(z_2)$ of the workpiece and the number of teeth or number of gears $(z_0)$ of the tool.

3. The method according to Claim 1 or 2, **characterized in that** tools of screw-shaped design are used as tools (10, 11, 16).

4. The method according to Claim 3, **characterized in that** the screw-shaped tool (10, 11) has at least two gears $(z_{0,1}, z_{0,2}, \text{etc.})$ which are differently profiled.

5. The method according to Claim 3 or 4, **characterized in that** the screw-shaped tool (16) has one gear $(z_{0,1})$ which has differently profiled gear regions over its length.

6. The method according to one of Claims 1 to 5, **characterized in that** the tool is a dressing tool for machining tools.

7. The method according to one of Claims 1 to 6, **characterized in that** gear-shaped tools, the teeth of which have different tooth geometries, are used as tools (14, 15).

8. The method according to one of Claims 1 to 7, **characterized in that** a dressable tool is used as tool, on which the different tool profile geometries are produced by means of a dressing tool.

**Revendications**

1. Procédé, permettant de réaliser des modifications de flancs de dents sur des dentures d'outils, lors duquel l'on déplace l'un vers l'autre la pièce à usiner et un outil et à cet effet, l'on enlève de la matière du flanc de la dent de la pièce à usiner, **caractérisé en ce que** l'on génère différentes modifications des flancs de dents sur des dents de la pièce à usiner (9) au moyen d'un procédé de fabrication en développante continu, **en ce que** l'outil (10, 11, 14 à 16) comporte individuellement différentes géométries de profil d'outil qui génèrent sur les dents de la pièce à usiner (9) les différentes modifications sur des flancs de dents.

2. Procédé selon la revendication 1, **caractérisé en ce qu'**un diviseur entier est réalisé entre le nombre de dents $(z_2)$ de la pièce à usiner et le nombre de dents ou de filets $(z_0)$ de l'outil.

3. Procédé selon la revendication 1 ou 2, **caractérisé en ce que** l'on met en oeuvre en tant qu'outils (10, 11, 16) des outils de forme hélicoïdale.

4. Procédé selon la revendication 3, **caractérisé en ce que** l'outil (10, 11) de forme hélicoïdale comporte au moins deux filets $(z_{0,1}, z_{0,2}, ...)$ qui sont profilés différemment.

5. Procédé selon la revendication 3 ou 4, **caractérisé en ce que** l'outil (16) de forme hélicoïdale comporte un filet $(z_{0,1})$ qui comporte sur sa longueur des zones filetées différemment profilées.

6. Procédé selon l'une quelconque des revendications 1 à 5, **caractérisé en ce que** l'outil est un outil de dressage, destiné à usiner des outils.

7. Procédé selon l'une quelconque des revendications 1 à 6, **caractérisé en ce que** l'on utilise en tant qu'outils (14, 15) des outils en forme de roue dentée, dont les dents comportent différentes géométries de dents.

**8.** Procédé selon l'une quelconque des revendications 1 à 7,
**caractérisé en ce que** l'on utilise en tant qu'outil un outil susceptible d'être dressé, sur lequel les différentes géométries d'outil peuvent être produites au moyen d'un outil de dressage.

Fig. 1

Fig.2

Fig.3

Fig. 4

Verzahnverfahren

Diskontinuierlich teilende Verzahnverfahren

Kontinuierliche teilende Verzahnverfahren

Schneckenförmiges Werkzeug

z.B.:
- Wälzschleifen
- Profilschleifen
- (Fertig- / Schäl-) Wälzfräsen

Zahnradförmiges Werkzeug

z.B.:
- Verzahnungshonen
- Verzahnungsschaben
- (Hart-) Wälzschälen
- (Hart-) Wälzstoßen

z.B. Wälzschleifen

z.B. Wälzfräsen

Werkzeug mit Gangzahl $z_0$, jeder Gang individuell profiliert
Hier: $z_0 = 3$

Gang $z_{0,1}$   Gang $z_{0,2}$   Gang $z_{0,3}$   Gang $z_{0,1}$

10/11

Zahn Z1, Gang $z_{0,1}$

Z10,$z_{0,1}$   Z11,$z_{0,2}$   Z12,$z_{0,3}$

Z9,$z_{0,3}$   Z2,$z_{0,2}$

Z8,$z_{0,2}$   Z3,$z_{0,3}$

Z7,$z_{0,1}$   Z6,$z_{0,3}$   Z5,$z_{0,2}$   Z4,$z_{0,1}$

Fig. 5

Werkstück mit Zähnezahl $z_2 = n \cdot z_0$, n = 1, 2, 3, ...
Hier: $z_2 = 12 = 4 \cdot z_0$

13

z.B. Verzahnungshonen
(Innen- und Außenverz.)

$n_0$

$n_2$

$\Sigma$

$v_{osc}$  $a_e$

12  13  14  9

z.B. Wälzschälen

$n_0$  $\Sigma$  $n_2$

15  13  12  9

$f_a$

$a_e$

Werkzeug mit Zähnezahl $z_0$ mit individueller
Zahngeometrie, Zuordnung zu WST wie in Abb. 5

14

9

**Fig. 6**

Werkstück
mit Zähnezahl $z_2$ mit $z_0 = i \cdot z_2$ (Außenverzahnung)
oder $z_2 = i \cdot z_0$ (Innenverzahnung), $i = 1, 2, 3, \ldots$

EP 3 993 940 B1

Werkzeug mit Gangzahl $z_0$, jeder Gang individuell entlang des Gangs profiliert, Hier: $z_0 = 1$

Gangbereich Gangbereich Gangbereich Gangbereich Gangbereich

$z_{0,1,Ref}$  $z_{0,1,fH\alpha,1}$  $z_{0,1,fH\alpha,2}$  $z_{0,1,Ca}$

16

9

Geometrisch-kinematisch
Zuordnung Kontaktpunkte
WZG-WST

Werkstück mit Zähnezahl $z_2$

z.B. gezieltes Diagonal-Wälzschleifen

16

$f_a$ $a_e$ $n_0$

13

9

$n_2$

z.B. gezielte Schwenkwinkel-variation oder Wälzkopplungslösung

16

$f_a$ $a_e$ $n_0$

$\varphi_{Schwenk}$

$V_{Shift}$

9

$n_2$

$n_0/n_2 \neq const$

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2581161 A2